Europäisches Patentamt

European Patent Office

Office européen des brevets

(19)

(11) **EP 1 157 970 A2**

(12) **EUROPEAN PATENT APPLICATION**

(43) Date of publication:
**28.11.2001 Bulletin 2001/48**

(51) Int Cl.[7]: **C01F 11/46**, B01D 53/50

(21) Application number: **00123061.4**

(22) Date of filing: **24.10.2000**

| | |
|---|---|
| (84) Designated Contracting States:<br>**AT BE CH CY DE DK ES FI FR GB GR IE IT LI LU MC NL PT SE**<br>Designated Extension States:<br>**AL LT LV MK RO SI** | (72) Inventors:<br>• **Babu, Manyam**<br>  **Upper St. Clair, PA 15241 (US)**<br>• **Smith, Kevin J.**<br>  **Monongahela, PA 15063 (US)**<br>• **Berisko, Daniel W.**<br>  **Corapolis, PA 15108 (US)** |
| (30) Priority: **22.05.2000 US 576589** | |
| (71) Applicant: **Dravo Lime, Inc.**<br>  **Pittsburgh, PA 15222 (US)** | (74) Representative: **Grünecker, Kinkeldey, Stockmair & Schwanhäusser Anwaltssozietät**<br>  **Maximilianstrasse 58**<br>  **80538 München (DE)** |

(54) **Sulfur dioxide removal process with regeneration scale prevention**

(57)    An oxidized magnesium sulfate-containing aqueous medium from a sulfur dioxide removal process using magnesium sulfite and magnesium bisulfite to remove sulfur dioxide from a gaseous stream is passed to a regeneration tank and an aqueous lime slurry fed thereto. The lime reacts with the magnesium sulfate to produce solid calcium sulfate and magnesium hydroxide, with the lime added in an amount sufficient to maintain the aqueous solution discharged from the regeneration tank at a pH of between 9.0-9.5, a magnesium ion content of about 200-600 ppm and a calcium ion content of about 2000-2500 ppm, so as to prevent scaling of lines and equipment downstream of the regeneration tank.

pH 9.0 - 9.5
$Mg^{++}$ = 200 - 600 ppm
$Ca^{++}$ = 2000 - 2500 ppm

FIG. 1

EP 1 157 970 A2

## Description

Field of the Invention

The present invention is a process for regenerating an oxidized magnesium sulfate-containing aqueous medium from a sulfur-dioxide removal process for removing sulfur dioxide from a gaseous stream, and a process for removing sulfur dioxide from a sulfur dioxide-containing gaseous stream in a wet scrubbing unit, using magnesium hydroxide and magnesium sulfite, where the spent aqueous scrubbing liquor is oxidized and then regenerated by addition of lime.

Background of the Invention

Processes have been devised to remove sulfur dioxide from a sulfur dioxide-containing gas, such as combustion off gases from a power plant, where magnesium-containing scrubbing components are used to react with and remove the sulfur dioxide.

One such process uses an aqueous solution of magnesium hydroxide and/or magnesium sulfite which reacts with the sulfur dioxide to produce magnesium sulfite from magnesium hydroxide present and magnesium bisulfite from magnesium sulfite present by the following reactions:

$$\text{(a) } Mg(OH)_2 + SO_2 \rightarrow MgSO_3 + H_2O;$$

$$\text{(b) } MgSO_3 + SO_2 + H_2O \rightarrow Mg(HSO_3)_2;$$

and

$$\text{(c) } Mg(OH)_2 + Mg(HSO_3)_2 \rightarrow 2MgSO_3 + 2H_2O.$$

A portion of the scrubbing solution in the wet scrubbing unit is removed and replaced by fresh scrubbing component-containing aqueous solution. The portion of aqueous scrubbing solution removed from the wet scrubbing unit contains magnesium sulfite and magnesium bisulfite and is passed to an oxidizing unit where the magnesium sulfite and magnesium bisulfite are oxidized to magnesium sulfate, by the following equations:

$$\text{(d) } Mg(HSO_3)_2 + O_2 \rightarrow MgSO_4 + H_2SO_4,$$

and

$$\text{(e) } Mg(SO_3) + \tfrac{1}{2}O_2 \rightarrow MgSO_4.$$

The magnesium sulfate, so produced, remains in the aqueous solution and is next subjected to a regeneration step where lime for regeneration is added to the magnesium sulfate-containing aqueous solution to form solid calcium sulfate (gypsum) and magnesium hydroxide, by the following equation:

$$MgSO_4 + Ca(OH)_2 \rightarrow Mg(OH_2) + CaSO_4 \cdot 2H_2O,$$

with the solid calcium sulfate precipitating from the aqueous solution. The solid calcium sulfate is then removed from the aqueous solution and magnesium hydroxide in the aqueous solution may be recycled to the wet scrubbing unit for use in removal of further sulfur dioxide from a gaseous stream.

Such magnesium based sulfur dioxide wet scrubbing processes are described, for example, in U. S. 5,039,499; U.S. 5,084,255; and U.S. 5,270,026, all of which are assigned to the assignee of the present invention and the contents of said patents are incorporated by reference herein.

Another such process uses a magnesium-enhanced lime slurry which reacts with the sulfur dioxide to produce solid calcium sulfite from the lime and magnesium sulfite and magnesium bisulfite from the magnesium ions present in the magnesium-enhanced lime slurry. A portion of the scrubbing medium is removed from the wet scrubbing unit and replaced by fresh magnesium-enhanced lime slurry. The portion of the aqueous scrubbing medium removed from the wet scrubbing unit contains solid calcium sulfite and dissolved magnesium sulfite and magnesium bisulfite and is passed to an oxidizing unit where the calcium sulfite is oxidized to solid calcium sulfate, and the magnesium sulfite and magnesium bisulfite oxidized to magnesium sulfate. The solid calcium sulfate is removed from the aqueous medium and the resultant magnesium sulfate, so produced, remains in the aqueous solution and is next subjected to a regeneration step where lime for regeneration is added to the magnesium sulfate-containing aqueous solution to form additional solid calcium sulfate and magnesium hydroxide, with the additional solid calcium sulfate precipitating from the aqueous solution. The additional solid calcium sulfate is then removed and magnesium hydroxide may be recycled for use as further magnesium-enhanced lime slurry for removal of sulfur dioxide from a gaseous stream.

Such magnesium-enhanced lime scrubbing processes are described, for example, in U.S. 3,914,378; U.S. 3,919,393; 3,919,394; 4,976,936; and 4,996,032, all of which are assigned to the assignee of the present invention and the contents of said patents are incorporated by reference herein.

While such processes have been found to be very useful in removing sulfur dioxide from gaseous streams, a problem can arise in situations where gypsum and calcium carbonate scales can form in process lines and equipment downstream from the regeneration tank. It is believed that the primary cause of such scaling is due to over-dosing of lime for regeneration fed to the magnesium sulfate solution in the regeneration tank, which is often operated at a pH level of between about 10-11. Such overdosing subsequently raises the pH and calcium ion levels in the downstream process lines and equipment, with the formation of scale, and resulting scaling, which is predominantly gypsum scaling with sometimes minor amounts of calcium carbonate scaling.

OBJECTS OF THE INVENTION

It is an object of the present invention to provide a process for regenerating an oxidized magnesium sulfate-containing aqueous medium from a sulfur-dioxide removal process so as to prevent scaling of lines and equipment downstream of the regeneration tank wherein lime for regeneration is added to the magnesium sulfate-containing aqueous solution.

It is another object of the present invention to provide a magnesium based or magnesium-enhanced lime scrubbing process using a wet scrubbing unit where the process is operated in a manner so as to prevent scaling of lines and equipment downstream of a regeneration tank wherein lime for regeneration is added to a magnesium sulfate-containing aqueous solution.

SUMMARY OF THE INVENTION

The present process regenerates an oxidized magnesium sulfate-containing aqueous medium from a sulfur dioxide removal process where a magnesium-containing aqueous scrubbing medium is used in a wet scrubbing unit, and a portion of the aqueous scrubbing medium containing magnesium sulfite and magnesium bisulfite is removed from the wet scrubbing unit and passed to an oxidizer where the magnesium sulfite and magnesium bisulfite are oxidized to magnesium sulfate. The oxidized aqueous scrubbing solution is then passed to a regeneration tank and an aqueous lime slurry is fed to the regeneration tank for reaction with the magnesium sulfate, with concomitant production of solid calcium sulfate and magnesium hydroxide, which are discharged from the regeneration tank. The aqueous lime slurry for regeneration is added to the magnesium sulfate solution in the regeneration tank in an amount sufficient to maintain the aqueous solution discharged from the regeneration tank at a pH of between 9.0 - 9.5, a magnesium ion content in the aqueous solution of between about 200 - 600 ppm, (parts per million) and a calcium ion content in the aqueous solution of between about 2000 - 2500 ppm. The solid calcium sulfate and magnesium hydroxide is then separated from the discharged aqueous solution for further processing and at least a portion of the aqueous solution may be returned to the wet scrubbing unit.

The present process also provides for desulfurizing of a sulfur dioxide-containing gaseous stream by contacting the gas stream with an aqueous medium containing a scrubbing compound selected from magnesium sulfite and magnesium hydroxide, in a wet scrubbing unit, to remove sulfur dioxide through production of magnesium sulfite and magnesium bisulfite, and removing a portion of the aqueous scrubbing medium from the wet scrubbing unit. The magnesium sulfite and magnesium bisulfite are then oxidized to magnesium sulfate. The oxidized aqueous scrubbing medium, containing magnesium sulfate, is then passed to a regeneration tank and regenerated according to the present process.

In another embodiment of the present process for desulfurizing of a sulfur dioxide-containing gaseous stream, the aqueous scrubbing medium is a magnesium-enhanced lime slurry, with calcium sulfite, as well as magnesium sulfite and magnesium bisulfite produced in the wet scrubbing unit, with a portion of the aqueous scrubbing medium removed from the wet scrubbing unit. The removed portion, containing solid calcium sulfite and dissolved magnesium sulfite and magnesium bisulfite, is oxidized to produce solid calcium sulfate and dissolved magnesium sulfate. The solid calcium sulfate is removed from the aqueous medium and the oxidized aqueous scrubbing medium, containing magnesium sulfate, is then passed to a regeneration tank and regenerated according to the present process.

In a further embodiment of the present process for desulfurizing of a sulfur dioxide-containing gaseous stream, the oxidized discharge from the oxidation unit is processed so as to provide a high purity magnesium hydroxide by-product.

DESCRIPTION OF THE DRAWINGS

The invention will become more readily apparent from the following description of preferred embodiments thereof shown, by way of example only, in the accompanying drawings, wherein:

Figure 1 is a schematic illustration of the present process for regenerating an oxidized magnesium sulfate-containing medium from a sulfur-dioxide removal process according to the present invention;

Figure 2 is a schematic illustration of a sulfur dioxide removal process according to the present invention using a solution of magnesium sulfite and magnesium bisulfite in a wet scrubbing unit;

Figure 3 is a schematic illustration of a sulfur dioxide removal process according to the present invention using a magnesium-enhanced lime slurry in a wet scrubbing unit; and

Figure 4 is a schematic illustration of a sulfur dioxide removal process according to the present invention where the discharge from the oxidizing unit is processed to provide a high-purity magnesium hydroxide by-product.

DETAILED DESCRIPTION

The present process provides for regeneration of an oxidized magnesium sulfate-containing aqueous solution from a sulfur dioxide wet scrubbing process which prevents scaling of lines and equipment downstream of a regeneration tank wherein lime for regeneration is added to the magnesium sulfate-containing aqueous solution to produce calcium sulfate, which precipitates from the aqueous solution, and magnesium hydroxide.

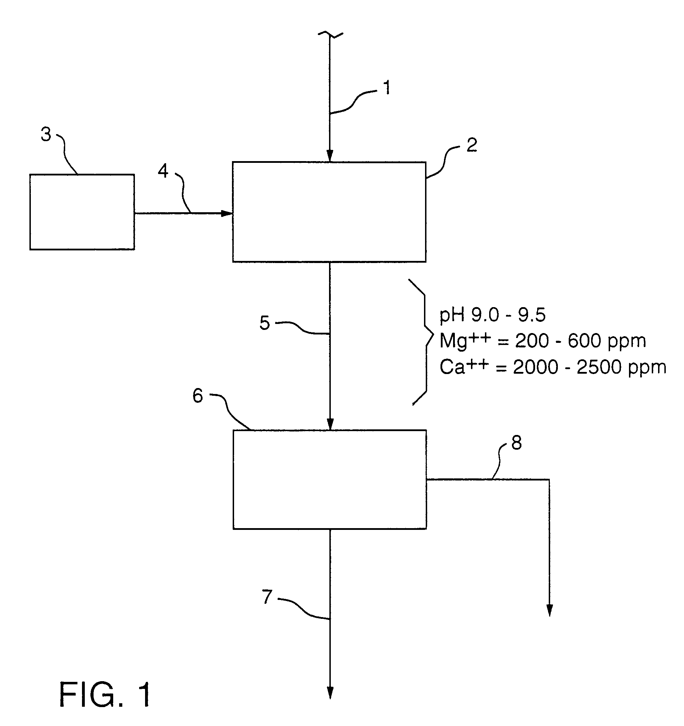

The schematic illustration of Figure 1 shows the present process for regenerating an oxidized magnesium sulfate-containing aqueous medium from a sulfur dioxide removal process. As shown, an aqueous medium from a sulfur dioxide removal system, which has been oxidized, and contains magnesium sulfate in solution, is passed through line 1 to a regeneration tank 2. An aqueous lime slurry, from a source 3 is fed to regeneration tank 2 through line 4 and reacts with magnesium sulfate present in the aqueous solution to produce solid calcium sulfate and magnesium hydroxide. The resultant mixture is passed through line 5 to a downstream solids separator 6. In a solids separator 6, the solid calcium sulfate (gypsum) is removed and discharged through line 7 for use or disposal, while the aqueous medium containing magnesium hydroxide is removed through line 8.

It is critical to the present process that the lime from source 3 be added to the regeneration tank 2 in an amount sufficient such that the aqueous solution discharged from the regeneration tank 2 through line 5 is maintained at a pH of between 9.0-9.5, a magnesium ion content in the aqueous solution of between about 200-600 ppm, and a calcium ion content in the aqueous solution of between about 2000-2500 ppm.

The pH of the aqueous solution discharged from the regeneration tank 2 must be between 9.0-9.5. If a pH of less than 9.0 is used, insufficient magnesium hydroxide precipitation occurs, while if a pH of greater than 9.5 is used, an increase in gypsum relative saturation results, with subsequent gypsum scaling. Preferably, the pH is maintained at a value of between about 9.1 - 9.3.

The magnesium ion content (Mg++) in the aqueous solution discharged from the regeneration tank 2 must be at a value of about 200-600 ppm, preferably between about 200-400 ppm. If less than about 200 ppm is present, calcium levels become greater than 2500 ppm which leads to gypsum scaling, while if greater than about 600 ppm is present, the magnesium hydroxide is not sufficiently precipitated from the solution.

The calcium ion content (Ca++) in the aqueous solution discharged from the regeneration tank 2 must be at a value of about 2000-2500 ppm, preferably between about 2100-2300 ppm. If less than about 2000 ppm is present, insufficient gypsum is precipitated, leaving sulfate levels >1200 ppm which also leads to gypsum scaling, while if greater than about 2500 ppm is present, danger of saturation and scaling due to gypsum formation from high calcium levels is a problem.

This, control of magnesium levels exiting the regeneration tank to 200-600 ppm discourages gypsum scaling of downstream process lines by suppressing saturation levels of both calcium and sulfate ions in the exiting liquor.

In one embodiment of a sulfur dioxide removal process of the present invention, a magnesium-containing aqueous scrubbing medium used in the wet scrubbing unit is a magnesium-containing aqueous scrubbing solution containing a scrubbing compound selected from magnesium sulfite and magnesium hydroxide that contacts the sulfur dioxide-containing gas to remove sulfur dioxide through production of magnesium bisulfite from magnesium sulfite and magnesium sulfite from magnesium hydroxide. A portion of the aqueous scrubbing solution, containing magnesium sulfite and magnesium bisulfite is removed from the wet scrubbing unit and passed to an oxidizer where the magnesium sulfite and magnesium bisulfite are oxidized to magnesium sulfate from an aqueous solution of magnesium sulfate. The aqueous solution of magnesium sulfate is then passed to a regeneration tank and contacted with a lime slurry as above described.

In another embodiment of a sulfur dioxide removal process of the present invention, a magnesium-enhanced lime scrubbing aqueous slurry is used in the wet scrubbing unit that contacts the sulfur dioxide-containing gas to remove sulfur dioxide through production of calcium sulfite, in addition to magnesium sulfite and magnesium bisulfite. A portion of the aqueous scrubbing slurry containing calcium sulfite, magnesium bisulfite and magnesium bisulfite is removed from the wet scrubbing unit and passed to an oxidizer where the calcium sulfite is oxidized to calcium sulfate and the magnesium sulfite and magnesium bisulfite are oxidized to magnesium sulfate. The calcium sulfate, a solid, is removed from the aqueous medium and the magnesium sulfate, in aqueous solution is then passed to a regeneration tank and contacted with a lime slurry as above described.

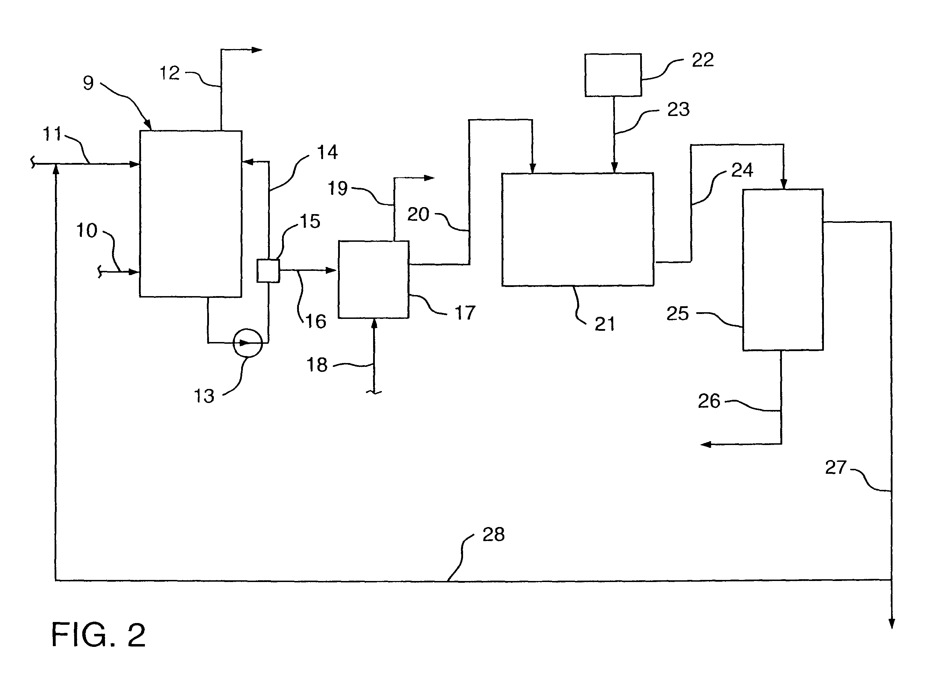

Referring now to Figure 2, which schematically illustrates the first embodiment of a sulfur dioxide removal process, there is shown a wet scrubbing unit 9 to which a sulfur dioxide-containing gas is charged though line 10, the gas contacts an aqueous solution containing magnesium sulfite or magnesium hydroxide fed thereto through line 11, with the sulfur dioxide removed from the gas by production of magnesium sulfite from magnesium hydroxide present and magnesium bisulfite from magnesium sulfite present, with clean gas discharged through line 12. A recycle of the wet scrubbing unit contents is effected by means of a pump 13 in recycle line 14, while a portion of the aqueous scrubbing solution is removed through valve 15. The portion of removed aqueous solution, removed through valve 15, which contains magnesium sulfite and magnesium bisulfite, passes through line 16 to an oxidizing unit 17. The removed aqueous solution is contacted in the oxidizing unit 17 with an oxygen-containing gas, such as air, fed through line 18, with off-gases discharged through line 19, so as to oxidize magnesium sulfite and magnesium bisulfite present in the aqueous solution to magnesium sulfate. The oxidized aqueous scrubbing solution, containing magnesium sulfate, is then passed through line 20 to a regeneration tank 21. An aqueous slurry of lime, from a source 22 is fed to the regeneration tank 21 through line 23 and reacts with the magnesium sulfate present in the aqueous solution therein to produce solid calcium sulfate and magnesium hydroxide. The lime slurry is added in an amount to maintain the aqueous solution in line 24 at a pH of between 9.0-9.5, a magnesium ion content of about 200 to 600 ppm, and a calcium ion content of about 2000-2500 ppm. The resultant mixture is fed through line 24 to a solids separator 25, where solid calcium sulfate is separated and removed from the aqueous solution and discharged through line 26, while the aqueous solution is removed through line 27. All or a portion of the removed aqueous solution may be returned to the wet scrubbing unit 9, preferably by means of line 28, which feeds into line 11 to the wet scrubbing unit 9.

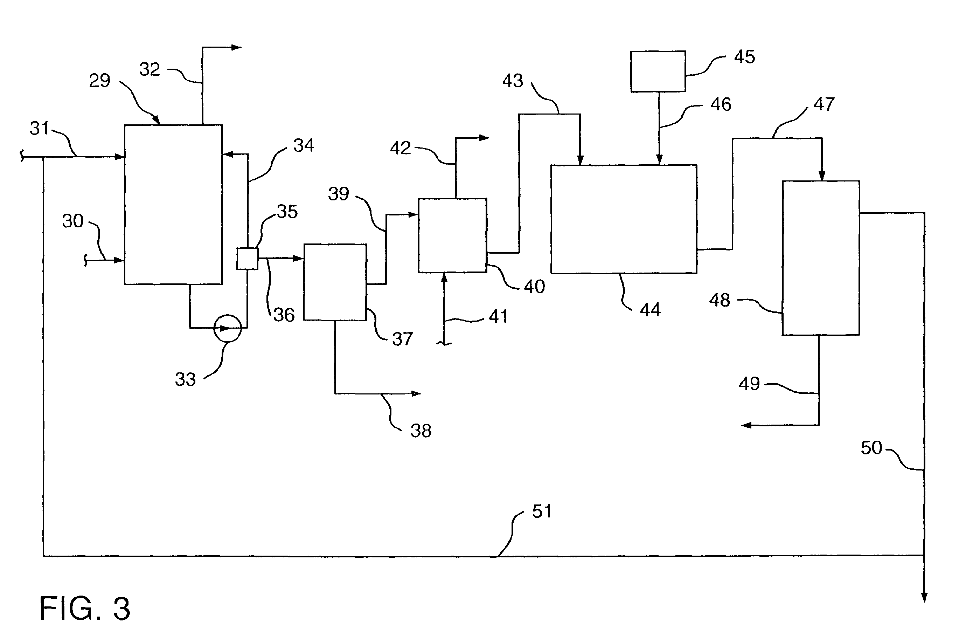

Referring now to Figure 3, there is schematically illustrated another embodiment of a sulfur dioxide wet scrubbing removal process where a magnesium enhanced aqueous lime slurry is used as the aqueous scrubbing medium in a wet scrubbing unit. As illustrated, a wet scrubbing unit 29 is provided to which a sulfur dioxide-containing gas is charged through line 30. The gas contacts a magnesium-enhanced aqueous lime slurry, containing lime and magnesium hydroxide fed to the wet scrubber 29 through line 31, with the sulfur dioxide removed from the gas by reaction with lime to form calcium sulfite, magnesium sulfite by reaction with magnesium hydroxide, and magnesium bisulfite from magnesium sulfite present, with clean gas discharged through line 32. A recycle of the wet scrubbing unit contents is effected by means of pump 33 in recycle line 34, while a portion of the aqueous scrubbing medium is removed through valve 35. The portion of removed aqueous medium removed through valve 35, passes through line 36 to a solids separator 37. In the solids separator 37, solid calcium sulfite is separated from the aqueous medium and discharged through line 38, while the clarified aqueous medium, a solution of magnesium sulfite and magnesium bisulfite is passed through line 39 to an oxidizer unit 40. The removed aqueous solution is contacted in the oxidizing unit 40 with an oxygen-containing gas, such as air, fed through line 41 with off-gases discharged through line 42, so as to oxidize magnesium sulfite and magnesium sulfate present in the aqueous solution to magnesium sulfate. The oxidized aqueous scrubbing solution, containing magnesium sulfate, is then passed through line 43 to a regeneration tank 44.

An aqueous slurry of lime, from a source 45 is fed to the regeneration tank 44 through line 46 and reacts with the magnesium sulfate present in the aqueous solution therein to produce solid calcium sulfate and magnesium hydroxide. The lime slurry is added in an amount to maintain the aqueous solution discharged through line 47 at a pH of between about 9.0-9.5, a magnesium ion content of about 200 to 600 ppm, and a calcium ion content of about 2000-2500 ppm. The resultant mixture is fed through line 47 to a second solids separator 48, where solid calcium sulfate is separated and removed from the aqueous solution and discharged through line 49, while a portion of the aqueous solution is removed through line 50. All, or a portion of the removal aqueous solution may be returned to the wet scrubbing unit 29, preferably by means of line 51, which may feed into line 31 to the wet scrubbing unit 29.

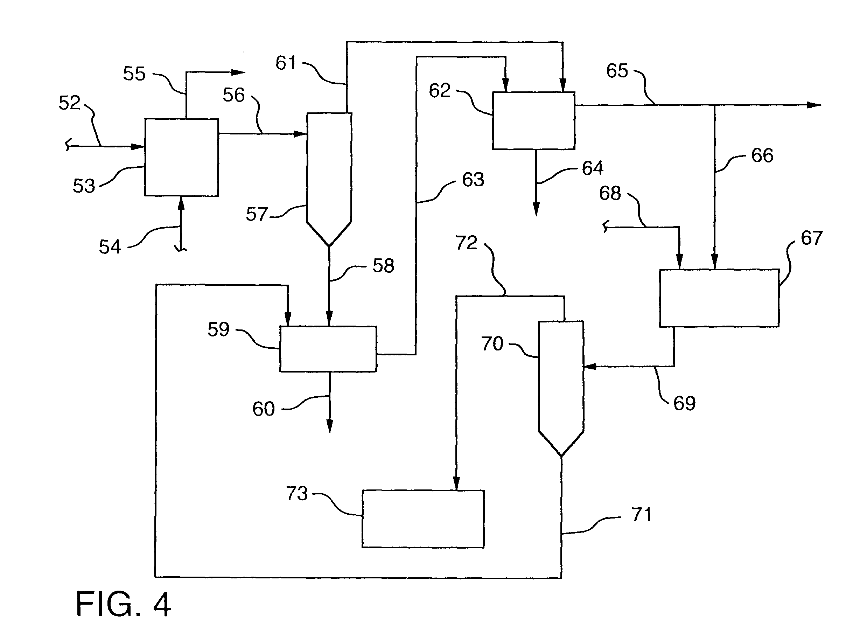

In a further embodiment of the process of the present invention illustrated in Figure 4, an aqueous medium from a wet-scrubbing unit as described in Figure 3, and containing magnesium sulfite and/or magnesium bisulfite and calcium sulfite is fed through a line 52 to an oxidizing unit 53 and contacted with an oxygen-containing gas fed through line 54, with off gases discharged through line 55. The oxidized aqueous medium, containing magnesium sulfate and calcium sulfate (gypsum) is passed through line 56 to a first solids separator 57, such as a hydroclone, where calcium sulfate solids are separated and removed through line 58 and passed to a filter 59. Gypsum product is recovered through line 60. The aqueous medium from first solids separator 57 is removed through line 61, and contains magnesium sulfate and some residual calcium sulfate, and is charged to a second solids separator 62. Aqueous filtrate from filter 59 may also be charged to the second solids separator 62 through line 63. Solids from second solids separator, primarily calcium sulfate and removed through line 64, while the aqueous medium containing primarily magnesium sulfate is discharged through line 65. The aqueous medium from line 65 may be returned to the wet scrubbing unit, or a portion thereof may be directed through line 66 to a regeneration tank 67. In regeneration tank 67, the aqueous medium containing magnesium sulfate is contacted with an aqueous lime slurry, such as an aqueous slurry of dolomitic low silica lime, fed through line 68. The lime slurry is added in an amount to maintain the aqueous solution discharged through line 69 at a pH of between 9.0-9.5, a magnesium ion content of about 200 to 600 ppm, and a calcium ion content of about 2000-2500 ppm. The resultant mixture is fed to a third solids separator 70 through line 69, where solid calcium sulfate is separated and removed from the aqueous medium and discharged through line 71 and may be fed to filter 59. The aqueous medium, containing a high purity magnesium hydroxide, is removed through line 72 and fed to a magnesium hydroxide collection unit 73. This is an excellent source of high-purity magnesium hydroxide.

## Claims

1. A process for regenerating an oxidized magnesium sulfate-containing aqueous medium from a sulfur-dioxide removal process for removing sulfur dioxide from a gaseous stream, so as to remove scale-forming components from the aqueous medium and prevent scaling of lines and equipment downstream from a regeneration tank where lime for regeneration is added to the magnesium sulfate-containing aqueous medium in the regeneration tank, for reaction with the magnesium sulfate, to produce solid calcium sulfate and magnesium hydroxide; comprising:

   discharging solid calcium sulfate, magnesium hydroxide and aqueous solution from the regeneration tank, while adding the lime for regeneration to the regeneration tank in an amount sufficient to maintain the aqueous solution discharged at a pH of between 9.0 - 9.5, a magnesium ion content in the aqueous solution of between about 200 - 600 ppm, and a calcium ion content in the aqueous solution of between about 2000 - 2500 ppm; and
   separating solid calcium sulfate from the aqueous solution.

2. The process for regenerating an oxidized magnesium sulfate-containing aqueous medium from a sulfur-dioxide removal process as defined in Claim 1 wherein the pH of the aqueous solution discharged from the regeneration tank is between 9.1 - 9.3.

3. The process for regenerating an oxidized magnesium sulfate-containing aqueous medium from a sulfur-dioxide removal process as defined in Claim 1, wherein the magnesium ion content in the aqueous solution discharged from the regeneration tank is between about 200 - 400 ppm.

4. The process for regenerating an oxidized magnesium sulfate-containing aqueous medium from a sulfur-dioxide removal process as defined in Claim 1, wherein the calcium ion content in the aqueous solution discharged from the regeneration tank is between about 2100 to 2300 ppm.

5. The process for regenerating an oxidized magnesium sulfate-containing aqueous medium from a sulfur-dioxide removal process as defined in Claim 1, wherein at least a portion of the aqueous scrubbing solution, after removal of calcium sulfate, is returned to a wet scrubbing unit for removal of sulfur dioxide from a sulfur dioxide-containing gas.

6. A process for regenerating an oxidized magnesium sulfate-containing aqueous medium from a sulfur-dioxide removal process for removing sulfur dioxide from a gaseous stream, so as to remove scale-forming components from the aqueous medium and prevent scaling of lines and equipment downstream from a regeneration tank where lime for regeneration is added to the magnesium sulfate-containing aqueous medium in a regeneration tank, for reaction with the magnesium sulfate, to produce solid calcium sulfate and magnesium hydroxide; comprising:

   discharging solid calcium sulfate, magnesium hydroxide and aqueous solution form the regeneration tank, while adding the lime for regeneration to the regeneration tank in an amount sufficient to maintain the aqueous solution discharged at a pH of between 9.1-9.3, a magnesium ion content in the aqueous solution of between about 200 - 400 ppm, and a calcium ion content in the aqueous solution of between about 2100 - 2300 ppm; and
   separating solid calcium sulfate from the aqueous solution.

7. The process for regenerating an oxidized magnesium sulfate-containing aqueous medium from a sulfur-dioxide removal process as defined in Claim 6, wherein at least a portion of the aqueous scrubbing solution, after removal of calcium sulfate, is returned to a wet scrubbing unit for removal of sulfur dioxide from a sulfur dioxide-containing gas.

8. A process for desulfurizing a sulfur dioxide-containing gas comprising:

   contacting a sulfur dioxide-containing gas with an aqueous medium containing a scrubbing compound, selected from magnesium sulfite and magnesium hydroxide, in a wet scrubbing unit to remove sulfur dioxide therefrom through production of magnesium sulfite and magnesium bisulfite;
   removing a portion of the aqueous scrubbing medium containing magnesium sulfite and magnesium bisulfite from the wet scrubbing unit;
   oxidizing the removed portion of aqueous scrubbing medium to convert magnesium sulfite and magnesium bisulfite therein to magnesium sulfate;
   passing the oxidized aqueous scrubbing medium, containing magnesium sulfate, to a regeneration tank;
   adding lime to the regeneration tank, for reaction with the magnesium sulfate, to produce solid calcium sulfate and magnesium hydroxide;
   discharging solid calcium sulfate, magnesium hydroxide and aqueous solution from the regeneration tank, while adding the lime to the regeneration tank in an amount sufficient to maintain the aqueous solution discharged at a pH of between 9.0 - 9.5, a magnesium ion content in the aqueous solution of between about 200 - 600 ppm, and a calcium ion content in the aqueous solution of between about 2000 - 2500 ppm; and
separating solid calcium sulfate from the aqueous solution.

9. The process for desulfurizing a sulfur dioxide containing gas as defined in Claim 8 wherein the pH of the aqueous solution discharged from the regeneration tank is between 9.1 - 9.3.

10. The process for desulfurizing a sulfur dioxide-containing gas as defined in Claim 8, wherein the magnesium ion content in the aqueous solution discharged from the regeneration tank is between about 200 - 400 ppm.

11. The process for desulfurizing a sulfur dioxide-containing gas as defined in Claim 8, wherein the calcium ion content in the aqueous solution discharged from the regeneration tank is between about 2100 to 2300 ppm.

12. The process for desulfurizing a sulfur dioxide-containing gas as defined in Claim 8, wherein at least a portion of the aqueous scrubbing solution, after removal of calcium sulfate, is returned to the wet scrubbing unit.

13. The process for desulfurizing a sulfur dioxide containing gas as defined in Claim 8 wherein said aqueous medium contains, in addition to magnesium sulfite and magnesium hydroxide, lime, as an aqueous slurry, and wherein sulfur dioxide is removed through production of calcium sulfite in addition to magnesium sulfite and magnesium bisulfite, and wherein said calcium sulfite is separated from said removed portion of aqueous scrubbing medium pri- or to said oxidizing.

14. The process for desulfurizing a sulfur dioxide containing gas as defined in Claim 13 wherein the pH of the aqueous solution discharged from the regeneration tank is between 9.1 - 9.3.

15. The process for desulfurizing a sulfur dioxide-containing gas as defined in Claim 13, wherein the magnesium ion content in the aqueous solution discharged from the regeneration tank is between about 200 - 400 ppm.

16. The process for desulfurizing a sulfur dioxide-containing gas as defined in Claim 13, wherein the calcium ion content in the aqueous solution discharged from the regeneration tank is between about 2100 to 2300 ppm.

17. The process for desulfurizing a sulfur dioxide-containing gas as defined in Claim 13, wherein at least a portion of the aqueous scrubbing solution, after removal of calcium sulfate, is returned to the wet scrubbing unit.

18. The process for desulfurizing a sulfur dioxide containing gas as defined in Claim 8, wherein said aqueous medium contains, in addition to magnesium sulfite and magnesium hydroxide, lime, as an aqueous slurry, and wherein sulfur dioxide is removed through production of calcium sulfite and magnesium bisulfite, and wherein the oxidized aqueous medium contains calcium sulfate and magnesium sulfate, and calcium sulfate from calcium sulfite of said wet scrubbing unit is removed therefrom prior to passage said oxidized aqueous medium, containing magnesium sulfate, to said regeneration tank.

19. The process for desulfurizing a sulfur dioxide containing gas as defined in Claim 18, wherein a portion of the magnesium sulfate aqueous medium, after separation of said calcium sulfate of said wet scrubbing unit and prior to passage to said regeneration tank is returned to said wet scrubbing unit.

20. The process for desulfurizing a sulfur dioxide containing gas as defined in Claim 18, wherein said lime, added as a lime slurry to said regeneration tank comprises a low silica-content magnesium-enhanced lime.

21. The process for desulfurizing a sulfur dioxide containing gas as defined in Claim 20, wherein solid calcium sulfate removed from the aqueous solution discharged from said regeneration tank is combined with calcium sulfate removed from said oxidized aqueous medium prior to passage to said re- generation tank.

pH 9.0 - 9.5
$Mg^{++}$ = 200 - 600 ppm
$Ca^{++}$ = 2000 - 2500 ppm

FIG. 1

FIG. 2

FIG. 3

FIG. 4